# EUROPÄISCHE PATENTSCHRIFT

(11) **EP 1 998 093 B1**
(45) Veröffentlichungstag und Bekanntmachung des Hinweises auf die Patenterteilung: **01.11.2017**
(21) Anmeldenummer: 08009729.8
(22) Anmeldetag: 28.05.2008
(51) Int. Cl.: F16K 41/00

(54) **Spindeldichtung**
Spindle seal
Joint de broche

(30) Priorität: 31.05.2007 DE 102007025375
(43) Veröffentlichungstag der Anmeldung: 03.12.2008
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- WO-A1-99/00603
- CH-A5- 653 750
- DE-A1- 2 338 745

## Beschreibung

Die Erfindung betrifft einen Drehantrieb mit einer Spindeldichtung zur Abdichtung einer wenigstens an einer Seite abgeflachten, insbesondere gewendelten Spindel gegen eine auf der Spindel angeordnete Spindelmutter oder Hülse.

Die Schaffung einer Dichtung für eine in verschiedener Weise unrunde Spindel, insbesondere einer zylindrischen Spindel mit einseitiger Abflachung ist nach wie vor problematisch. Zwischen dem Umfang der Spindel und der abgeflachten Seite entstehen Ecken oder Winkel von ca. 90°, so dass auch eine an den Querschnitt der Spindel angepasste Dichtung bei Drehmomentbelastung der Spindel in dem Bereich der Ecken ein Leck bilden kann.

Insbesondere treten Probleme auf, wenn die Spindel nicht nur abgeflachte Seiten aufweist, sondern im Übrigen gewendelt ist. Die folgende Beschreibung soll sich daher insbesondere mit der Abdichtung einer gewendelten Spindel mit abgeflachten Seiten befassen, ohne dass die Anmeldung insoweit eingeschränkt werden soll.

Zur Herstellung eines Drehantriebs, also eines Antriebs zur Drehung einer Säule oder Stange um ihre eigene Längsachse sind Schraubgetriebe bekannt, die eine Spindel in unmittelbarer axialer Verlängerung der Säule umfassen, auf denen eine Spindelmutter axial beweglich ist. Zur Vermeidung einer Selbsthemmung wird nicht eine Spindel im herkömmlichen Sinn in Kombination mit einer üblichen Gewindemutter verwendet, sondern eine Spindel mit relativ steilen Gewindegängen, beispielsweise zwei gegenüberliegenden Wendelgängen auf der Spindel und zwei Druckflächen auf gegenüberliegenden Seiten im Inneren der "Spindelmutter".

Das Wort "Spindelmutter" ist hier in Anführungsstriche gesetzt, da es nicht um eine herkömmliche Gewindemutter geht, sondern um einen Ring mit zwei gegenüberliegenden Druckflächen im Inneren des Ringes. Derartige Getriebe gestatten es, durch Axialverschiebung der Mutter die Spindel in Drehung zu versetzen. Getriebe dieser Art können für Schwenktüren und -fenster, beispielsweise in Bussen verwendet werden.

In der nicht vorveröffentlichten DE 10 2006 031 477 wird ein entsprechender Drehantrieb beschrieben, bei dem im Inneren einer ringförmigen Spindelmutter auf den beiden gegenüberliegenden Innenflächen Rollen gelagert sind, die gegen die beiden gegenüberliegenden Wendelgänge gedrückt werden. Die ringförmige Spindelmutter bildet einen axial verschiebbaren Kolben in einem Zylinder, der die Spindel konzentrisch umgibt. Damit der Kolben pneumatisch oder hydraulisch in Axialrichtung verschoben werden kann, muss er gegenüber der Spindel abgedichtet sein. Übliche Dichtungspackungen können nicht verwendet werden, da sie ein zylindrisches Innenprofil aufweisen.

Herkömmlicherweise müssen daher Packungen von aufeinandergestapelten, dünnen, scheibenförmigen Dichtungen verwendet werden. Die Dichtungswirkung derartiger Dichtungsstapel ist unbefriedigend.

Dies beruht vor allem darauf, dass die einzelnen Dichtungsscheiben ein Innenprofil aufweisen, das aus zwei gegenüberliegenden, parallelen geraden Abschnitten und zwei kreisbogenförmigen Abschnitten in jeweils abwechselnder Anordnung besteht. Dadurch entstehen insgesamt vier im Wesentlichen rechtwinklige Ecken, die nicht dicht schließen, vor allem dann nicht, wenn ein gewisses Antriebsspiel zwischen der Spindelmutter und der Spindel vorgesehen sein muss.

CH 653 750 A5 offenbart einen Drehantrieb für eine Welle. Der Drehantrieb ist gebildet mit einem Kolben, welcher drehfest, aber axial verschieblich in dem doppelt wirkenden Zylinder geführt ist. Zwischen dem Kolben und der Welle findet eine Antriebsverbindung in Ausbildung als Spindeltrieb Einsatz, welcher eine axiale Bewegung des Kolbens in eine Verdrehung einer Spindel, die von einem Endbereich der Welle ausgebildet ist, umwandelt. Der Kolben besitzt eine Ausnehmung, im Bereich welcher dieser die Spindelmutter bildet, welche in Wirkverbindung mit der Spindel tritt. Um die beiden Arbeitskammern des doppelt wirkenden Zylinders gegeneinander abzudichten, ist eine Abdichtung des Kolbens im Bereich der Spindelmutter gegenüber der Außenfläche der Spindel erforderlich. Hierzu findet gemäß CH 653 750 eine Dichtung 14 Einsatz, welche ein Quadring aus synthetischem Kautschuk ist.

Der Erfindung liegt daher die Aufgabe zugrunde, einen Drehantrieb mit einer Dichtung zu schaffen, die eine Abdichtung des Kolbens auch dann ermöglicht, wenn zwischen der Spindel und dem Kolben ein gewisses Spiel notwendig ist.

Diese Aufgabe wird erfindungsgemäß dadurch gelöst, dass in dem Drehantrieb eine Dichtung vorgesehen ist, deren Innenprofil dem Außenprofil der Spindel über eine vorgegebene Länge folgt und dass die Dichtung in einem als Käfig dienenden Ring angeordnet ist, der die Dichtung gegen die Spindel vorspannt. Das Innenprofil der Dichtung ist genauso gewendelt, wie das Außenprofil der Spindel.

Eine derartige Dichtung liegt über eine längere Strecke gegen die Spindel an und schließt im Wesentlichen dicht, auch wenn ein gewisses Umfangsspiel zwischen der Spindel und der Spindelmutter benötigt wird.

Vorzugsweise ist die Dichtung in dem Kolben so gelagert, dass sie ein gewisses Spiel in Umfangsrichtung aufweist und dem Spiel der Spindel in dem Kolben folgen kann.

Die erfindungsgemäße Dichtung ist innerhalb eines Ringes angeordnet, der Druck auf die Dichtung ausübt und diese gegen die Spindel drückt. Der Ring und die Dichtung liegen in einer Ausnehmung der Spindelmutter. Der Ring kann beispielsweise eine ballige Innenfläche aufweisen.

Im Folgenden werden bevorzugte Ausführungsbeispiele der Erfindung anhand der beigefügten Zeichnung näher erläutert.
- Fig. 1: ist ein teilweiser Längsschnitt durch eine Spindel mit Dichtung;
- Fig. 2: ist ein Schnitt entlang der Linie A-A in Fig. 1;
- Fig. 3: zeigt eine abgewandelte Ausführungsform gegenüber Fig. 1; und
- Fig. 4: zeigt eine weitere abgewandelte Ausführungsform zu Fig. 1.

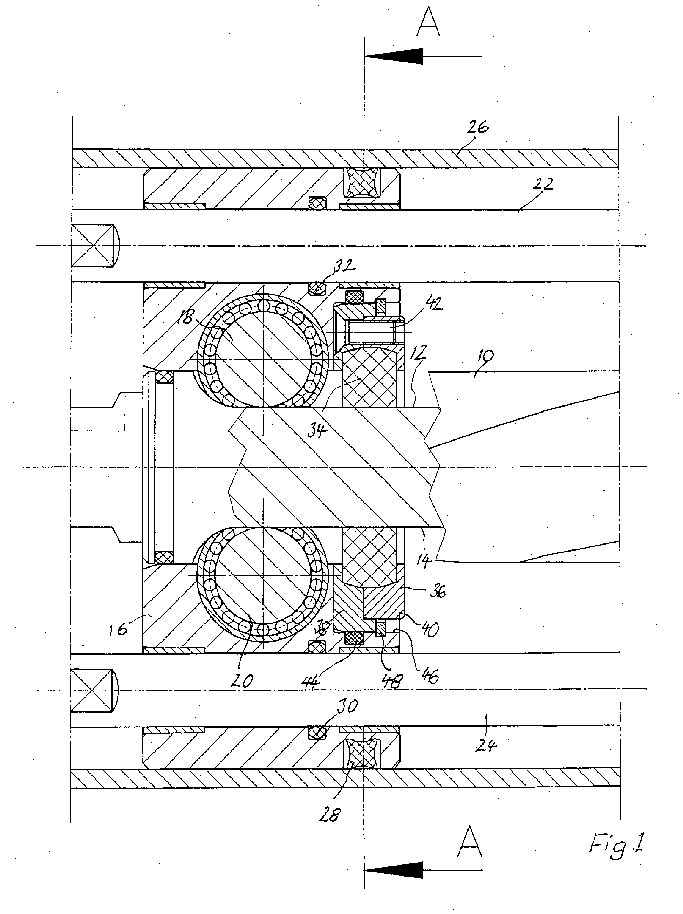

Fig. 1 ist ein Teilschnitt aus einem Drehantrieb. Eine Spindel 10 ist in Fig. 1 in unterschiedlichen Winkelstellungen gezeigt. Die Spindel weist zwei einander gegenüberliegende, flache, wendelförmige Gänge 12, 14 auf. Auf der Spindel sitzt eine Spindelmutter 16. In der Spindelmutter 16 sind im Inneren auf zwei gegenüberliegenden Seiten Lagerrollen 18, 20 gelagert, die gegen die beiden gegenüberliegenden, gewendelten Gänge der Spindel 10 anliegen und die Spindel führen, wenn die Spindelmutter 16 in Axialrichtung, also von links nach rechts in Fig. 1 bewegt wird. Die Lagerrollen sind ihrerseits in einem nicht im Einzelnen beschriebenen Nadellager gelagert.

Die Spindelmutter 16 wird auf zwei im radial-äußeren Bereich verlaufenden, axialen Stangen 22, 24 bei ihrer axialen Bewegung geführt, so dass sie sich nicht verdrehen kann und Reaktionskräfte, die sich beim Verschieben auf der Spindel 10 ergeben, nicht zur Wirkung kommen.

Die gesamte Anordnung aus Spindel 10, Führungsstangen 22, 24 und Spindelmutter 16 liegt in einer Zylinderhülse 26. Die Spindelmutter 16 kann innerhalb der Zylinderhülse 26 in Axialrichtung durch pneumatischen oder hydraulischen Druck verschoben werden. Dies ist im Einzelnen nicht gezeigt.

Damit die Axialverschiebung der Spindelmutter 16 möglich wird, muss die Spindelmutter zum einen gegenüber der Hülse und zum anderen gegenüber der Spindel 10 und schließlich auch gegenüber den Führungsstangen 22, 24 abgedichtet sein. Für die Abdichtung gegenüber der Hülse 26 ist eine Dichtung 28 vorgesehen. Die Abdichtung gegenüber den Führungsstangen 22, 24 erfolgt mithilfe von O-Ringen 30, 32. Etwas komplizierter ist die Abdichtung gegenüber der gewendelten Spindel 10.

Zu diesem Zweck ist eine Dichtung 34 vorgesehen, deren Innenkontur in nicht erkennbarer Weise der gewendelten Außenkontur der Spindel entspricht. Diese Dichtung 34 liegt innerhalb eines aus zwei zusammengehörigen Teilen gebildeten Ringes 36. Die beiden Teile dieses Ringes sind mit 38, 40 bezeichnet. Diese beiden Teile 38, 40 werden mithilfe von Schrauben 42 verbunden und schließen dabei die Dichtung 34 ein.

Durch das Zusammenziehen der beiden Teile 38, 40 des Ringes wird die Dichtung 34 radial nach innen gedrückt, so dass sie mit Vorspannung gegen die Spindel anliegt. Dies ergibt sich aus der Form der Ring-Teile 38, 40 und/oder einer gewissen Quetschwirkung beim Zusammenziehen des Ringes aus den Teilen 38, 40. Die Vorspannung der Dichtung 34 gegen die Spindel 10 gewährleistet, dass die Dichtung stets leckagefrei abdichtet.

Die Dichtung 34 weist eine ballige Außenkontur auf, und die beiden Teile 38, 40 des Ringes 36 sind auf der Innenfläche entsprechend konkav ausgebildet, wie Fig. 1 zeigt.

Der Ring 36 seinerseits ist mithilfe einer Dichtung 44 innerhalb einer Ausnehmung 46 der Spindelmutter 16 abgedichtet und wird mithilfe eines Sicherungsrings 48 in der Ausnehmung 46 gehalten. Der Ring 36 übt einen gleichmäßigen Druck von außen auf die Dichtung aus, so dass diese gegen die Außenflächen der Spindel gedrückt bzw. gegen diese Flächen gehalten wird und abdichtet.

Fig. 1 zeigt einige weitere Einzelheiten, die im vorliegenden Zusammenhang nicht wesentlich sind. Auf die genaue Erläuterung dieser Einzelheiten kann daher verzichtet werden.

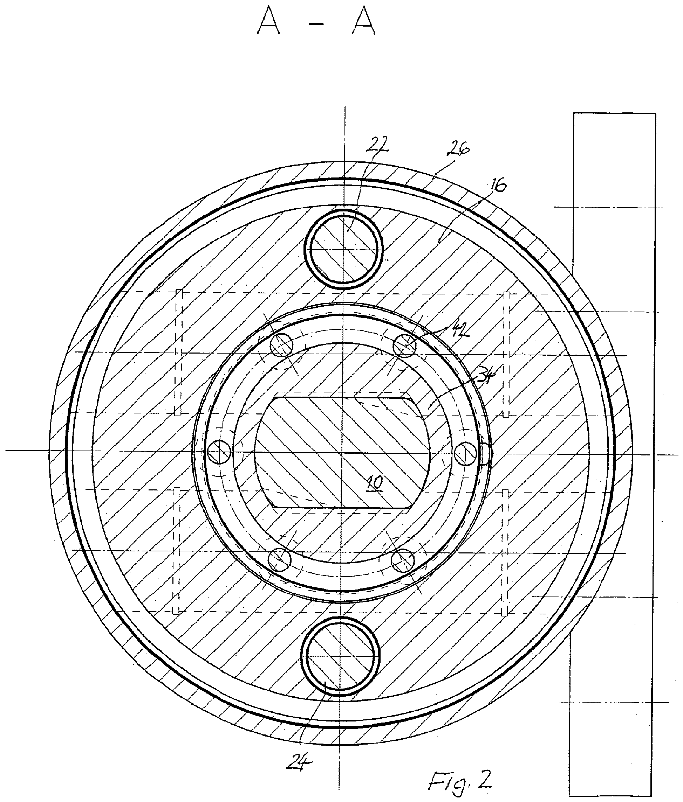

Ergänzende Informationen lassen sich der Fig. 2 entnehmen.

In Fig. 2 werden dieselben Bezugsziffern verwendet wie in Fig. 1, so dass teilweise eine erneute Beschreibung entbehrlich ist. In Fig. 2 sind die Spindel 10, die Dichtung 34 und die Hülse 26 gezeigt. Erkennbar sind in einem waagerechten Schnitt auch die Führungsstangen 22, 24.

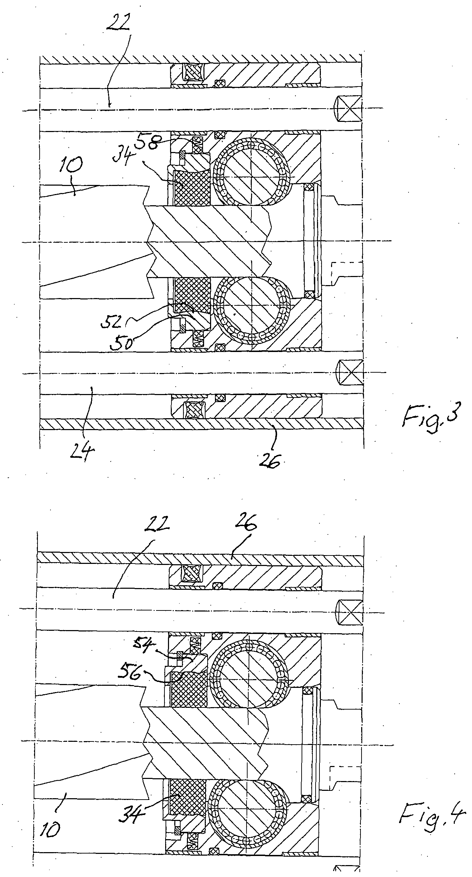

Fig. 3 und 4 entsprechen im Wesentlichen Fig. 1, zeigen jedoch zwei abgewandelte Ausführungsformen.

In Fig. 3 ist ein einteiliger Ring 50 vorgesehen, der die Dichtung 34 einschließt. Die innere Ringfläche 52 ist ballig ausgebildet, so dass die Dichtung 34 in Axialrichtung nicht aus dem Ring herausrutschen kann und die zweiteilige Bauweise des Ringes nicht erforderlich ist. Im Übrigen übt die ballige Innenkontur 52 des Ringes 50 gemäß Fig. 3 einen Druck auf die Dichtung 34 gegen die Spindel 10 aus, der bewirkt, dass die Dichtung mit Vorspannung gegen die Spindel anliegt, wie bei der Ausführungsform gemäß Fig. 1.

Fig. 4 zeigt einen weiteren einteiligen Ring 54, dessen innere Ringfläche 56 wellenförmig ausgebildet ist und die Dichtung 34 auf diese Weise festhält. Die wellige Innenkontur 56 des Ringes führt im Übrigen, wie bei den zuvor dargestellten Ausführungsformen, zu einer Vorspannung der Dichtung 34 gegen die Spindel 10.

Während der Ring 36 gemäß Fig. 1 zweiteilig ausgebildet ist und die Dichtung 34 von beiden Seiten her festhält, verwenden die Ausführungsformen gemäß Fig. 3 und 4 einteilige Ringe, die die Dichtung 34 aufgrund der gegenseitigen Profilierung zwischen Innenfläche des Ringes und Außenfläche der Dichtung festhalten.

Die innere Ringfläche 52 gemäß Fig. 3 ist ballig ausgebildet, und die Dichtung 34 ist in diesem Fall konkav eingezogen, so dass die Dichtung 34 nur unter Aufbringung einer erhöhten Kraft in den Ring 50 gemäß Fig. 3 hineingedrückt werden kann und nicht ohne Weiteres aus dem Ring herausrutscht.

Der Ring 54 gemäß Fig. 4 weist eine innere Ringfläche 56 auf, die, wie erwähnt, eine Wellenform besitzt und auf diese Weise ein axiales Verrutschen der Dichtung 34 verhindert. Da die Dichtung keinen nennenswerten Axialkräften ausgesetzt ist, wird in der Regel die Verwendung nur eines Ringes mit einer Profilierung der Innenfläche, wie in Fig. 3 und 4 gezeigt, zur axialen Festlegung der Dichtung ausreichen.

Bei den Ausführungsformen gemäß Fig. 3 und 4, bei denen die Dichtung 34 in einem einteiligen Ring 50, 54 gehalten ist und gegen die Spindel 10 radial vorgespannt wird, ist der Ring nach außen durch eine spezielle Dichtung 58 abgedichtet, die, wie die Dichtung 44 gemäß Fig. 1, eine gewisse axiale und in Umfangsrichtung gerichtete Bewegung des Ringes in der entsprechenden Ausnehmung ebenso wie Verkantungsbewegungen in der Ausnehmung 46 zulässt.

## Patentansprüche

1. Drehantrieb mit einer Dichtung (34) zur Abdichtung einer wenigstens an einer Seite abgeflachten gewendelten Spindel (10) gegen eine auf der Spindel (10) angeordnete Spindelmutter (16), wobei die Dichtung (34) in einem als Käfig dienenden Ring (36, 50, 54) angeordnet ist, der die Dichtung (34) gegen die Spindel (10) vorspannt, wobei das Innenprofil der Dichtung (34) genauso gewendelt ist wie das Außenprofil der Spindel (10), das Innenprofil der Dichtung (34) dem Außenprofil der Spindel (10) über eine vorgegebene Länge folgt und die Dichtung (34) von dem Ring (36, 50, 54) mit kreisförmigem Innenquerschnitt umgeben ist, der eine leichte Vorspannung auf die Dichtung (34) ausübt.

2. Drehantrieb nach Anspruch 1, **dadurch gekennzeichnet, dass** die Dichtung (34) in einem Ring (36, 50, 54) angeordnet ist, der mit leichtem Spiel in einer Ausnehmung (46) der Spindelmutter (16) liegt.

3. Drehantrieb nach Anspruch 1, **dadurch gekennzeichnet, dass** der Ring (36) aus zwei Ring-Teilen (38, 40) besteht und mithilfe von Verbindungsmitteln (42) verbunden ist.

4. Drehantrieb nach einem der Ansprüche 1 bis 2, **dadurch gekennzeichnet, dass** der Ring (50, 54) einteilig ausgebildet ist und auf der Innenfläche eine Profilierung aufweist, die die Dichtung (34) im Inneren des Ringes festhält.

5. Drehantrieb nach Anspruch 4, **dadurch gekennzeichnet, dass** die innere Ringfläche (52) konkav ausgebildet ist.

6. Drehantrieb nach Anspruch 4, **dadurch gekennzeichnet, dass** die innere Ringfläche (52) ballig ausgebildet ist.

7. Drehantrieb nach Anspruch 4, **dadurch gekennzeichnet, dass** die innere Ringfläche (52) gewellt ausgebildet ist.

## Claims

1. Rotational drive comprising a sealing (34) for sealing a helical spindle (10) being flattened on at least one side against a spindle nut (16) being arranged on the spindle (10), the sealing (34) being arranged in a ring (36, 50, 54) serving as a cage which biases the sealing (34) against the spindle (10), the sealing (34) having an inner profile having the same helical shape as the outer profile of the spindle (10), the inner profile of the sealing (34) following the outer profile of the spindle (10) over a predetermined length and the sealing (34) being surrounded by the ring (36, 50, 54) with a circular inner cross section which applies a small pretention upon the sealing (34)

2. Rotational drive of claim 1, **characterised in that** the sealing (34) is arranged in a ring (36, 50, 54) which is lying with a small play in a recess (46) of the spindle nut (16).

3. Rotational drive of claim 1, **characterised in that** the ring (36) consists of two ring-parts (38, 40) and is connected by connecting means (42).

4. Rotational drive of one of claims 1 to 2, **characterised in that** the ring (50, 54) is formed by one single piece and the inner surface of the ring (50, 54) comprises a profile which fixes the sealing (34) in the interior of the ring.

5. Rotational drive of claim 4, **characterised in that** the inner ring surface (52) has a concave shape.

6. Rotational drive of claim 4, **characterised in that** the inner ring surface (52) has a cambered or crowned shape.

7. Rotational drive of claim 4, **characterised in that** the inner ring surface (52) has a corrugated shape.

## Revendications

1. Dispositif d'entraînement rotatif avec un joint d'étanchéité (34) permettant d'étanchéifier une broche spiralée (10), aplatie au moins sur un côté, contre un écrou de broche (16) disposé sur la broche (10), le joint d'étanchéité (34) étant disposé dans une bague (36, 50, 54) servant de cage, qui précontraint le joint d'étanchéité (34) contre la broche (10), le profil interne du joint d'étanchéité (34) étant spiralé comme le profil externe de la broche (10), le profil interne du joint d'étanchéité (34) suivant le profil externe de la broche (10) sur une longueur prédéterminée et le joint d'étanchéité (34) étant entouré par la bague (36, 50, 54) avec une section transversale interne circulaire, qui exerce une légère précontrainte sur le joint d'étanchéité (34).

2. Dispositif d'entraînement rotatif selon la revendication 1, **caractérisé en ce que** le joint d'étanchéité (34) est disposé dans la bague (36, 50, 54) qui est disposée, avec un léger jeu, dans un évidement (46) de l'écrou de broche (16).

3. Dispositif d'entraînement rotatif selon la revendication 1, **caractérisé en ce que** la bague (36) est constituée de deux parties de bague (38, 40) et est reliée à l'aide de moyens de liaison (42).

4. Dispositif d'entraînement rotatif selon l'une des revendications 1 à 2, **caractérisé en ce que** la bague (50, 54) est conçue d'une seule pièce et présente, sur sa face interne, un profilé qui maintien le joint d'étanchéité (34) à l'intérieur de la bague.

5. Dispositif d'entraînement rotatif selon la revendication 4, **caractérisé en ce que** la face interne de la bague (52) présente une forme concave.

6. Dispositif d'entraînement rotatif selon la revendication 4, **caractérisé en ce que** la face interne de la bague (52) présente une forme bombée.

7. Dispositif d'entraînement rotatif selon la revendication 4, **caractérisé en ce que** la face interne de la bague (52) présente une forme ondulée.
